# EUROPÄISCHE PATENTSCHRIFT

(11) **EP 1 640 577 B1**
(45) Veröffentlichungstag und Bekanntmachung des Hinweises auf die Patenterteilung: **24.01.2007**
(21) Anmeldenummer: 04023015.3
(22) Anmeldetag: 28.09.2004
(51) Int. Cl.: F01N 3/20

(54) **Heizbarer Kunststofftank**
Heatable plastic tank
Réservoir en plastique chauffable

(43) Veröffentlichungstag der Anmeldung: 29.03.2006
(73) Patentinhaber: Bonar Plastics GmbH, 68757 Hockenheim (DE); Promens International B.V., 7418 BB Deventer (NL)
(72) Erfinder: Scheder, Uwe, 69488 Birkenau (DE)
(74) Vertreter: Schmid, Rudolf

(56) Entgegenhaltungen:
- DE-A1- 10 256 727
- US-A1- 2002 081 239

## Beschreibung

Die Erfindung betrifft heizbare, vorzugsweise einteilige Kunststofftanks mit den Merkmalen des Oberbegriffs des Anspruchs 1 und ein Verfahren zur Herstellung derartiger heizbarer Kunststofftanks mit den Merkmalen des Oberbegriffs des Anspruchs 6. Das Dokument US-A-2002/0081239 offenbart einen Kunststofftank nach dem Oberbegriff des Anspruchs 1.

Heizbare Kunststofftanks des Standes der Technik sind mit komplett in die Tankwand eingeschmolzenen, z. B. am Boden des Tanks liegenden Heizwendeln versehen, die dicht mit Polyethylen umschlossen sind. Nachteilig bei diesem Stand der Technik für Heizwendeln ist es, dass Anbringen von Heizwendeln in der Tankmitte oder an der Oberseite des Tanks nur möglich ist mit anderen Heizwendeln oder anderer Tankform. Nachteilig bei diesem Stand der Technik sind auch die durch das umgebende Polyethylen eingeschränkte Wärmeübertragung von den Heizwendeln auf das Füllmedium des Tanks, die durch die Einbettung der Heizwendel in die Wand des Kunststofftanks beschränkte Geometrie, die begrenzte Länge der Heizwendeln und nach außen überstehende, beschädigungsanfällige Adapter zu weiterführenden Heizleitungen am Heizmittelein- und - auslass in der Tankwand.

Aufgabe der Erfindung ist es, heizbare Kunststofftanks zu schaffen mit besserer Wärmeübertragung von den Heizwendeln auf das Füllmedium des Tanks, freier voneinander unabhängiger Geometrie der Heizwendel und des Kunststofftanks, unbegrenzter Länge der Heizwendeln und vor Beschädigungen gesicherten Adaptern am Heizmittelein- und -auslass der Tankwand. Aufgabe der Erfindung ist es auch, ein vorteilhaftes Verfahren zur Herstellung derartiger heizbarer Kunststofftanks zu schaffen.

Die Lösung erfolgt mit heizbaren Kunststofftanks mit den Merkmalen des Anspruchs 1 und einem Verfahren zur Herstellung derartiger heizbarer Kunststofftanks mit den Merkmalen des Anspruchs 6.

Gemäß der Erfindung ist ein heizbarer Kunststofftank, insbesondere ein einteiliger, heizbarer Kunststofftank, in dem z. B. ein Flüssigkeitsgemisch aus Wasser-Harnstoff enthalten ist, mit mindestens je einem Heizmittelein- und -auslass in einer Tankwand und einer an Heizmittelein- und -auslass angeschlossenen Heizwendel im Inneren des Kunststofftanks versehen. Die Heizwendel ist im wesentlichen freitragend und in mindestens einem Auflagebereich an der Tankwand von Kunststoff umsintert, wie der Heizmittelein- oder -auslass, die mit je einem im wesentlichen zylindrischen Einlegeteil ausgebildet sind zur koaxialen Aufnahme von Leitungsenden der Heizwendel. Zum Verhindern von Austritt von Flüssigkeitsgemisch aus dem erfindungsgemäßen Kunststofftank ist an den Heizmittelein- und -auslassen je mindestens eine Aufnahme in der Kunststoff-Tankwand für eine Abdichtung vorgesehen zu Adaptern einer Heizleitung. Vorteilhaft ist, dass erfindungsgemäß die Heizwendel weitgehend frei ist von der Tankwand und damit Geometrie und Länge der Heizwendeln frei von den Vorgaben der Tankwand gestaltbar ist. Die erfindungsgemäß nur im Auflagebereich der Tankwand von Kunststoff umschmolzene und über den größten Teil frei von Kunststoff sich im Tank erstreckende Heizwendel bietet verbesserten Wärmeübergang zum Füllmedium des Tanks. Das im wesentlichen zylindrische Einlegeteil verbessert die Montage der Heizwendel und die Einleitung von Kräften in die Tankwand. Anschließen und Lösen von Adaptern der Heizleitung an die in die Tankwand eingelassenen Heizmittelein- und -auslasse ist erfindungsgemäß vereinfacht und gesichert gegen Beschädigung. Für verbesserte Recyclefähigkeit ist eine leichte werkstoffliche Trennung von Tank und integrierter Heizwendel möglich.

Gemäß einer bevorzugten Ausgestaltung der Erfindung ist die Abdichtung flach oder radial dichtend zwischen Kunststofftank und Adaptern für die Heizleitungen ausgebildet, wobei für größere Durchmesser der Heizwendel vorzugsweise radiale Abdichtungen vorgesehen sind.

Gemäß einer weiteren bevorzugten Ausgestaltung der Erfindung ist die Heizwendel für verbesserte Haltbarkeit gegen das Gemisch aus Wasser-Harnstoff und für günstige Wärmeübertragungseigenschaften aus Edelstahl. Die vorzugsweise angeschweißten oder verpressten, als Einlegemuttern ausgebildeten Einlegeteile an Leitungsenden sind zur Sicherung gegen Auszug und Verdrehen als komplettes Einbauteil ausgebildet, wobei Einlegemuttern mit Schlüsselprofil als kostengünstige DIN-Teile bevorzugt sind.

Gemäß einer weiteren bevorzugten Ausgestaltung der Erfindung sind die Einlegemuttern öldicht verschweißt oder verpresst mit den Leitungsenden der Heizwendel für verbesserte Verwendbarkeit der Heizwendel in Flüssigkeits-, Gas- oder Diesel-Kraftstofftanks.

Gemäß einer weiteren bevorzugten Ausgestaltung der Erfindung sind die Einlegemuttern wärmeisoliert, um die Einleitung von Wärme/Kälte aus der Heizleitung in die Kunststoff-Tankwand zu behindern und damit einer temperaturbedingten Schwächung der Festigkeit der Kunststoff-Tankwand oder deren Versprödung entgegen zu wirken.

Gemäß einer weiteren Ausgestaltung der Erfindung wird ein Verfahren zur kostengünstigen, vorteilhaften Herstellung heizbarer Kunststofftanks vorgeschlagen durch Aufstecken und Anschweißen oder Verpressen je einer Einlegemutter an Leitungsenden einer Heizwendel für Heizmittelein- und - auslass, Befestigen der Heizwendel über spezielle Formeinsätze an je einer Einlegemutter in einem auf Haupt- und Nebendrehachsen gelagerten Metallformwerkzeug, Einfüllen von geeignetem Kunststoffpulver in das Metallformwerkzeug, Versetzen des Metallformwerkzeugs in Taumelbewegungen um die Haupt- und Nebendrehachsen mit Drehzahlen von z. B. 6/4, Eintragen von Wärme in das Metallformwerkzeug an der Innenwandung des Metallformwerkzeugs und Abkühlen des Kunststofftanks. Vorteilhaft ergibt sich erfindungsgemäß, dass die Heizwendel im Inneren des einteiligen Kunststofftanks für optimalen Wärmeeintrag in den Kunststofftank im wesentlichen frei bleibt von Kunststoff und außer direkt an den Einlegemuttern ausschließlich an Auflagebereichen der Tankwand zur Stabilisierung von Kunststoff umsintert ist.

Die Erfindung wird im folgenden anhand bevorzugter Ausführungsbeispiele dargestellt. Es zeigen:
- Fig. 1:: einen Querschnitt durch einen oder -auslass in Heizmittelein- einer Tankwand eines heizbaren, einteiligen Kunststofftanks gemäß der Erfindung,
- Fig. 2:: ein Teilansicht eines Querschnitts durch einen Heizmittelein- oder -auslass mit radialer Abdichtung gemäß der Erfindung, und
- Fig. 3:: eine perspektivische Ansicht eines heizbaren, einteiligen Kunststofftanks mit Heizwendel gemäß der Erfindung.

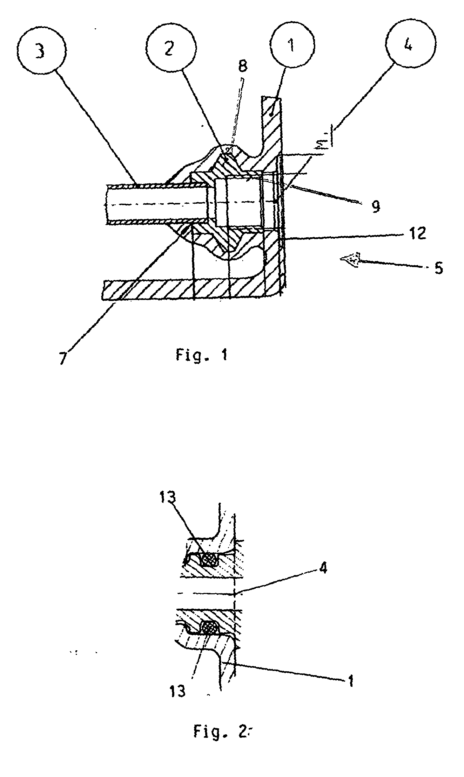

Fig. 1: Ein heizbarer, einteiliger Kunststofftank 5 für ein Gemisch aus Wasser/Harnstoff ist mit je einem in eine Kunststoff-Tankwand 1 eingeformten Heizmittelein- oder - auslass 4 versehen mit einer Aufnahme 12 für eine flach dichtende Abdichtung (nicht dargestellt) zu einer weiter führenden Heizleitung (nicht dargestellt) mit einem temperatur- und druckbeaufschlagten Medium, wie z. B. Kühlwasser eines Kraftfahrzeugs. Kunststoff-Tankwand 1 ist aus Thermo-Duroplasten, wie z. B. PE, PP, PA ... gefertigt.

Am Heizmittelein- oder -auslass 4 ist je ein Leitungsende 3 einer Heizwendel 6 vom Inneren des Kunststofftanks 5 koaxial in eine mit dem Heizmittelein- oder -auslass 4 über unterschiedliche Innendurchmesser stufenförmig verbundene zylindrische Öffnung 7 einer Einlegemutter 2 gesteckt und öldicht verschweißt oder verpresst. Heizwendel 6 ist aus Edelstahl und Einlegemutter 2 aus metallischem Werkstoff gefertigt. Einlegemutter 2 ist an einem größten Durchmesser mit einem sechseckigen Außenumfang 8 für eine DIN-Schlüsselweite und einer Wärmeisolation aus Polyamid/Glasfaser ausgebildet. Einlegemutter 2 weist ein Gewinde 9 in Heizmittelein- oder -auslass 4 zum Anschluss von Adaptern zur weiterführenden Heizleitung auf. Einlegemutter 2 ist zusammen mit dem Leitungsende 3 der Heizwendel 6 vollständig vom Kunststoff der Tankwand 1 umsintert.

Fig. 2: Übereinstimmende Merkmale sind mit den Bezugszeichen aus Fig. 1 bezeichnet. Die in die Kunststoff-Tankwand 1 eingeformten Heizmittelein- oder - auslasse 4 sind mit einer radial dichtenden Abdichtung 13 in einer im Vergleich zur Ausführung mit der flach dichtenden Abdichtung axial tieferen Einmündung der Kunststoff-Tankwand 1 versehen.

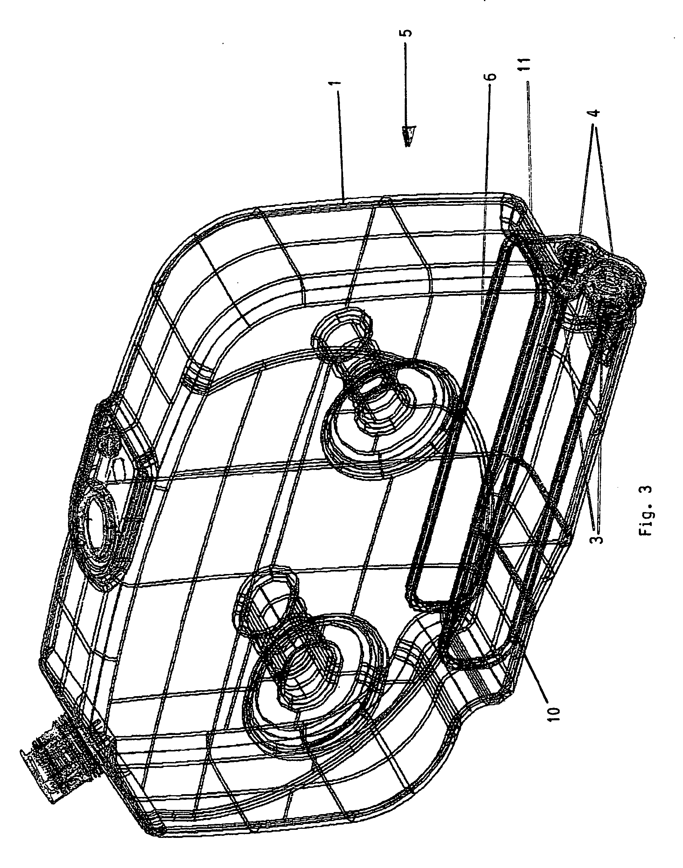

Fig. 3: Übereinstimmende Merkmale sind mit den Bezugszeichen aus Fig. 1 und 2 bezeichnet. Die Heizwendel 6 ist mit einem Außendurchmesser, der an die Durchmesser des Kühlwasserkreislaufs angepasst ist, bis zu mehreren Metern lang, mehrfach u-förmig gebogen im Kunststofftank 5 und ist in einem Auflagebereich 10 am Boden und in einem Auflagebereich 11 an der Tankwand 1 von Kunststoff der Tankwand 1 umsintert und gehalten. Einlegemuttern 2 sind an den Leitungsenden 3 der Heizwendel 6 für Heizmittelein- und -auslass 4 öldicht verschweißt oder verpresst.

Um den Heizmittelein- und -auslass 4 kann die Tankwand 1 vorzugsweise von außen verstärkt sein (nicht dargestellt), um Stabilitätsproblemen vorzubeugen, die durch Wärmeeintrag und dadurch verursachte Erweichung der Tankwand 1 entstehen können.

### Verfahren zur Herstellung des heizbaren Kunststofftanks 5

Je eine Einlegemutter 2 wird an Leitungsenden 3 der Heizwendel 6 für jeden Heizmittelein- und -auslass 4 aufgesteckt und an der zylindrischen Öffnung 7 öldicht angeschweißt für eine komplette Heizwendel 6. Die Heizwendel 6 wird über spezielle Formeinsätze an je einer Einlegemutter 2 in einem Metallformwerkzeug (nicht dargestellt) befestigt und geeignetes Kunststoffpulver in das Metallformwerkzeug eingefüllt. Das Metallformwerkzeug ist auf Haupt- und Nebendrehachsen gelagert und wird in Taumelbewegungen um die Haupt- und Nebendrehachsen mit Drehzahlen von z. B. 6/4 versetzt, so dass Schwer- und Zentrifugalkräfte das eingefüllte Kunststoffpulver an der Innenwandung des Metallformwerkzeugs verteilen. Durch Wärmeeintrag in das Metallformwerkzeug wird das eingefüllte Kunststoffpulver während bis zu 20 min auf bis zu 300° C an der Innenwandung des Metallformwerkzeugs erhitzt und auch über die Einlegemuttern 2 aufgeschmolzen zu einem einteiligen Kunststofftank und in einem Abkühlprozess von ca. einer Viertelstunde solidifiziert.

Die Heizwendel 6 wird von den speziellen Formeinsätzen an den Einlegemuttern 2 und mit dem einteiligen Kunststofftank 5 vom Metallformwerkzeug gelöst. Die Heizwendel 6 im Inneren des einteiligen Kunststofftanks 5 bleibt für optimalen Wärmeeintrag in den Kunststofftank 5 im wesentlichen frei von Kunststoff und außer direkt an den Einlegemuttern 2 ist die Heizwendel 6 zur Stabilisierung ausschließlich an Auflagebereichen 10, 11 der Tankwand 1 von Kunststoff umsintert.

## Patentansprüche

1. Heizbarer Kunststofftank (5), insbesondere einteiliger Kunststofftank (5) für beispielsweise Wasser-Harnstoff Gemische, mit mindestens je einem Heizmittelein- und - auslass (4) in mindestens einer Kunststoff-Tankwand (1) und einer an Heizmittelein- und -auslass (4) angeschlossenen Heizwendel (6) im Inneren des Kunststofftanks (5),
**dadurch gekennzeichnet, daß**
die Heizwendel (6) im wesentlichen freitragend und in mindestens einem Auflagebereich (10, 11) im Inneren des Kunststofftanks (5) an der Kunststoff-Tankwand (1) von Kunststoff umsintert ist, die Heizmittelein- und - auslasse (4) umsintert und mit je einem im wesentlichen zylindrischen Einlegeteil (2) ausgebildet sind, in die koaxial Leitungsenden (3) der Heizwendel (6) münden, und je mindestens eine Aufnahme (12) in der Kunststoff-Tankwand (1) für eine Abdichtung zu einem Adapter einer Heizleitung an den Heizmittelein- und -auslassen (4) vorgesehen ist.

2. Heizbarer Kunststofftank (5) gemäß Anspruch 1, **dadurch gekennzeichnet, dass** die Aufnahme (12) für mindestens eine flache oder radiale Abdichtung (13) ausgebildet ist.

3. Heizbarer Kunststofftank (5) gemäß Anspruch 1, **dadurch gekennzeichnet, dass** die Heizwendel (6) aus Edelstahl mit vorzugsweise als angeschweißte Einlegemuttern ausgebildeten Einlegeteilen (2) an Leitungsenden (3) ausgebildet ist.

4. Heizbarer Kunststofftank (5) gemäß Anspruch 3, **dadurch gekennzeichnet, dass** die Einlegemuttern (2) öldicht verschweißt oder verpresst sind.

5. Heizbarer Kunststofftank (5) gemäß Anspruch 3, **dadurch gekennzeichnet, dass** die Einlegemuttern (2) wärmeisoliert sind.

6. Verfahren zur Herstellung heizbarer Kunststofftanks (5) gemäß Anspruch 1, **gekennzeichnet durch**
Aufstecken und Anschweißen oder Verpressen einer Einlegemutter (2) an Leitungsenden (3) einer Heizwendel (6) für Heizmittelein- und -auslass (4),
Befestigen der Heizwendel (6) über spezielle Formeinsätze an je einer Einlegemutter (2) in einem auf Haupt- und Nebendrehachsen gelagerten Metallformwerkzeug,
Einfüllen von geeignetem Kunststoffpulver in das Metallformwerkzeug,
Versetzen des Metallformwerkzeugs in Taumelbewegungen um die Haupt- und Nebendrehachsen mit vorbestimmten Drehzahlen,
Eintragen von Wärme in das Metallformwerkzeug an der Innenwand des Metallformwerkzeugs und Abkühlen des Kunststofftanks.

## Claims

1. Heatable plastic tank (5), particularly one-piece plastic tank (5) for instance water-urea mixtures comprising at least one fuel inlet and one fuel outlet (4) respectively in at least one plastic tank wall (1) and one heating coil (6) connected inside of the plastic tank (5) to the fuel inlet and fuel outlet (4), **characterized in that** the heating coil (6) is essentially self-supporting and sintered in plastic on at least one bearing surface (10, 11) inside of the plastic tank (5) at the plastic tank wall (1), the fuel inlet and fuel outlet (4) are formed in sinter and having each an essentially cylindrical insert (2) receiving coaxially ends (3) of lines of the heating coil (6), and **in that** at least one reception (12) is provided in the plastic tank wall (1) for sealing with an adapter of a heating line to the fuel inlet and fuel outlet (4).

2. Heatable plastic tank (5) according to claim 1, **characterized in that** the reception (12) is formed for at least one flat or radial sealing (13).

3. Heatable plastic tank (5) according to claim 1, **characterized in that** the heating coil (6) is formed of stainless steel with preferably inserts (2) formed as inserted nuts welded to the ends (3) of lines.

4. Heatable plastic tank (5) according to claim 3 **characterized in that** the inserted nuts (2) are welded or compressed in an oil tight manner.

5. Heatable plastic tank (5) according to claim 3 **characterized in that** the inserted nuts (2) are heat insulated.

6. Method for producing a heatable plastic tank (5) according to claim 1, **characterized by**
fixing and welding or compressing of an inserted nut (2) to ends (3) of lines of a heating coil (6) for fuel inlet and fuel outlet (4),
fixing of the heating coil (6) by means of specially formed inserts to a respective inserted nut (2) in a metallic molding tool supported on main and auxiliary rotary axis,
supplying of suitable plastic powder in the metallic molding tool,
driving the metallic molding tool to dumpling movements around the main and auxiliary rotary axis at predefined rotary speeds,
supplying heat to the metallic molding tool at the inner wall of the metallic molding tool und cooling of the plastic tank.

## Revendications

1. Réservoir en plastique chauffable (5), en particulier réservoir en plastique monobloc (5) pour, par exemple, des mélanges eau-urée, avec au moins une entrée et une sortie de dispositif de chauffage (a) dans au moins une paroi (1) dudit réservoir en plastique et un filament spiralé de chauffage (6) raccordé à ladite entrée et sortie de chauffage (4) à l'intérieur dudit réservoir en plastique (5),
**caractérisé en ce que**
ledit filament spiralé de chauffage (6) est essentiellement en porte-à-faux et est, dans au moins une zone d'appui (10,11) à l'intérieur dudit réservoir en plastique (5), aggloméré à la paroi (1) dudit réservoir en plastique sur son pourtour par frittage de poudre plastique, que les entrées et sorties dudit dispositif de chauffage (4) sont agglomérées par frittage et constituées chacune d'une pièce d'insertion (2) essentiellement cylindrique dans laquelle débouchent les extrémités coaxiales dudit câble (3) du filament spiralé de chauffage et qu'il est pour chacune prévu au moins un logement (12) dans la paroi (1) dudit réservoir de plastique pour un joint vers un adaptateur d'un câble de chauffage aux entrées et sorties de chauffage (4).

2. Réservoir en plastique chauffable (5) selon la revendication 1, **caractérisé en ce que** le logement (12) est conçu pour au moins un joint plat ou radial (13).

3. Réservoir en plastique chauffable (5) selon la revendication 1, **caractérisé en ce que** le filament spiralé de chauffage (6) est réalisé en acier spécial avec, de manière préférée, des pièces d'insertion (2) constituées par des écrous d'insertion soudés aux extrémités desdits câbles (3).

4. Réservoir en plastique chauffable (5) selon la revendication 3, **caractérisé en ce que** les écrous d'insertion (2) sont soudés ou serrés de manière à être étanches à l'huile.

5. Réservoir en plastique chauffable (5) selon la revendication 3, **caractérisé en ce que** les écrous d'insertion (2) sont isolés thermiquement.

6. Procédé de fabrication de réservoirs en plastique chauffables (5) selon la revendication 1, **caractérisé par**
le placement, le soudage ou le serrage d'un écrou d'insertion (2) sur les extrémités d'un câble (3) d'un filament spiralé de chauffage (6) pour l'entrée et la sortie d'un dispositif de chauffage (4),
la fixation, à chaque extrémité, dudit filament spiralé de chauffage (6) au moyen de parties amovibles spéciales à un écrou d'insertion (2) sur un outil de formage en métal monté sur des axes principaux et secondaires,
le remplissage d'une poudre de plastique adaptée dans l'outil de formage en métal,
le placement en nutation à une vitesse prédéterminée de l'outil de formage en métal par rapport aux axes principaux et secondaires,
l'introduction de chaleur dans l'outil de formage en métal sur la paroi intérieure dudit outil de formage en métal et le refroidissement dudit réservoir de plastique.
